# EUROPÄISCHE PATENTSCHRIFT

(11) **EP 0 761 480 B1**
(45) Veröffentlichungstag und Bekanntmachung des Hinweises auf die Patenterteilung: **03.02.1999**
(21) Anmeldenummer: 96111675.3
(22) Anmeldetag: 18.07.1996
(51) Int. Cl.: B60D 1/06

(54) **Kugelkopfkupplung**
Ball hitch assembly
Rotule d'attelage

(30) Priorität: 08.09.1995 DE 19533202
(43) Veröffentlichungstag der Anmeldung: 12.03.1997
(73) Patentinhaber: Firma Albert Berndes, D-32312 Lübbecke (DE)
(72) Erfinder: Berndes, Karl Josef, 32312 Lübbecke (DE)
(74) Vertreter: Stracke, Alexander, Dipl.-Ing.

(56) Entgegenhaltungen:
- DE-U- 9 412 514
- GB-A- 2 021 504
- GB-A- 2 083 426
- US-A- 3 830 580

## Beschreibung

Die vorliegende Erfindung betrifft eine Kugelkopfkupplung gemäß dem Oberbegriff des Anspruches 1.

Eine derartige Kugelkopfkupplung ist aus der DE 19 64 974 bekannt.

Bei dieser Kugelkopfkupplung, die sich ansonsten bewährt hat, muß nach einem Bruch der Schenkelfeder zum Lösen der Handgriff hochgezogen werden, um ihn dann so verschwenken zu können, daß sich die Kugelpfanne öffnet und die Kugel freigibt, wobei zur Sicherung eine zusätzliche Zugfeder vorgesehen ist.

Neuere Vorschriften fordern jedoch eine solche Sicherung, die zweckmäßigerweise in einer Blockierung der unbeabsichtigten Verschwenkung des Handgriffs besteht.

Eine in diesem Sinn vorgesehene Sicherung ist in der nicht vorveröffentlichten, allerdings nicht gattungsgemäßen DE 195 00 332 beschrieben.

Dort wird der Handgriff dadurch blockiert, daß eine Nase 17 im Bedarfsfall unterseitig an der Wandung der Gehäuseoberseite anliegt.

Jedoch unterschliegt diese Nase beim Normalbetrieb, also beim beabsichtigten öffnen der Kugelpfanne durch Hochziehen des Handgriffs, einem gewissen Verschleiß, da die Nase hierbei an einer Gehäusekante entlanggleitet.

Der vorliegenden Erfindung liegt daher die Aufgabe zugrunde, eine gattungsgemäße Kugelkopfkupplung so zu gestalten, daß auch bei einem Bruch der Schenkelfeder der Handgriff unverändert bedienbar bleibt und die zur Sicherung notwendigen Teile weitgehend verschleißfrei sind.

Diese Aufgabe wird durch eine Kugelkopfkupplung gelöst, die die Merkmale des Anspruches 1 aufweist.

Durch diese konstruktive Ausgestaltung ist zunächst einmal gewährleistet, daß im Fall eines Bruchs der Schenkelfeder der Handgriff durch den Sicherungszapfen gegen ein unbeabsichtigtes Hochschwenken gesichert ist. In diesem Fall stützt sich der Sicherungszapfen an der Oberseite des Kupplungsgehäuses ab, so daß der Verschwenkweg des Handgriffs blockiert ist.

Im Normalfall, also beim Verschwenken des Handgriffs zum Öffnen der Kugelpfanne wird der Handgriff, dessen Drehachse durch den Arretierungsbolzen gebildet wird, um die Strecke der Langlöcher, durch die der Querzapfen geführt ist, verschwenkt und dadurch der Sicherungszapfen so aus dem Abstützbereich gebracht, daß er frei in die Gehäuseöffnung eintauchen kann.

Die Nutzstrecke der Langlocher muß daher mindestens der Dicke des Sicherungszapfens entsprechen. In der Praxis wird diese Strecke jedoch länger sein, so daß ein einwandfreies Verschwenken des Sicherungszapfens aus dem Abstützbereich am Kupplungsgehäuse gesichert ist.

Hinzu kommt, daß in Schließstellung der Kugelpfanne der Sicherungszapfen mit einem gewissen, wenn auch geringen Abstand zum Abstützbereich des Kupplungsgehäuse endet.

Ein weiterer Vorteil der Erfindung liegt darin, daß zur vollen Funktionsfähigkeit der Kugelkopfkupplung vor allem im Funktionsbereich des Arretierungsbolzens, der Kugelpfanne und des Handgriffs keine nennenswerten Toleranzen einzuhalten sind.

Naturgemäß führt dies zu einer kostengünstigen Herstellung.

Hierzu trägt auch die einstückige Ausbildung des Kupplungsgehäuses bei, das ohne weitere Nachbearbeitung als Stanzteil ausgebildet sein kann.

Vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1 und 2: eine erfindungsgemäße Kugelkopfkupplung in verschiedenen Stellungen, jeweils in einem Längsschnitt,

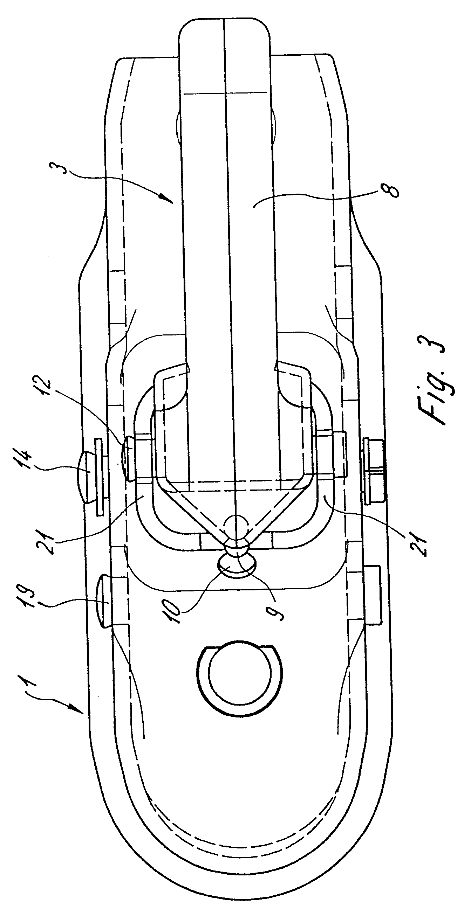

- Fig. 3: eine Draufsicht auf die Kugelkopfkupplung,

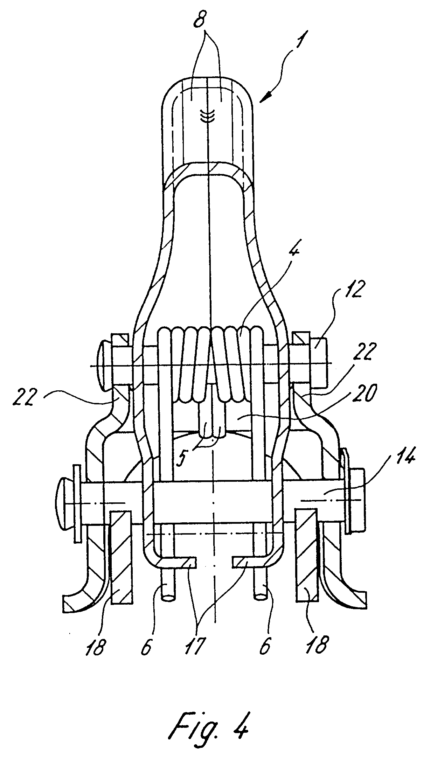

- Fig. 4: einen Querschnitt durch die Kugelkopfkupplung gemäß der Linie IV-IV in Fig. 1.
- Fig. 5: ein weiteres Ausführungsbeispiel einer erfindungsgemäßen Kugelkopfkupplung in einem Längsschnitt,
- Fig. 6: die Kugelkopfkupplung nach der Figur 5 in einer Draufsicht.

Die in den Figuren gezeigte Kugelkopfkupplung für einen Anhänger besteht in ihrem Grundaufbau aus einem Kupplungsgehäuse 1, das am vorderen Ende als Teilhohlkugel ausgebildet ist und einen Teil der Kupplungsschale bildet, die im Gebrauchsfall eine fahrzeugseitige Kugel aufnimmt.

Weiter besteht die Kugelkopfkupplung aus einer schwenkbar in dem Kupplungsgehäuse 1 gelagerten, in Schließstellung arretierbaren und durch eine Feder 7, die auf einem Lagerbolzen 19 geführt ist, bewegten Kugelpfanne 2. Diese weist zwei von der Kupplungsschale abgewandte Auflaufnasen 18 auf, die gleichzeitig als Halterung für die Kugelpfanne 2 dienen, die auf dem Lagerbolzen 19, der im übrigen im Kupplungsgehäuse 1 befestigt ist, schwenkbar gehalten ist.

Zu der Kugelkopfkupplung gehört weiterhin ein Handgriff 3, der aus einem Griffteil 8 sowie zwei parallel und mit Abstand zueinander verlaufenden Seitenteilen 21 besteht und vorzugsweise aus zwei miteinander verschweißten Halbschalen gebildet ist.

Im Bereich des Griffteiles 8 ist eine Schenkelfeder 4 mit ihren Windungen angeordnet, die auf einem Querbolzen 12 geführt ist, der mit dem Griffteil 8 fest verbunden ist.

Ein Schenkel 5 der Schenkelfeder 4 stützt sich an einer Anlage 20 ab, die durch eine entsprechende Ausformung der Oberseite des Kupplungsgehäuses 1 gebildet ist.

Durch Anlage an einen angeformten Anschlag 17 drückt der andere Schenke 6 der Schenkelfeder 4 die Seitenteile 21 des Handgriffs 3 gegen einen Arretierungsbolzen 14, der sowohl in Langlöchern 15, die sich in den Seitenwänden des Kupplungsgehäuses 1 in Längsachsrichtung erstrecken, als auch in Langlöchern 16 geführt ist, die quer zu den Langlöchern 15 verlaufend in den Seitenteilen 21 angeordnet sind.

Durch die Anordnung des Anschlags 17 unterhalb des Arretierbolzens 14 wird der Handgriff ständig in Sicherungsposition gedrückt, da üblicherweise zwei Schenkelfedern 4 vorgesehen sind, von denen eine rechts und die andere links gewickelt ist und bei einem Bruch einer Schenkelfeder 4 die andere weiter gegen den Anschlag 17 drückt.

Eine evtl. Bewegung des Arretierbolzens 14 in Öffnungsrichtung wird bei einem Bruch der Schenkelfeder 4 dadurch begrenzt, daß sich ein Sicherungszpafen 9 an einer Abstützfläche 11 der Oberseite des Kupplungsgehäuses 1 abstützt.

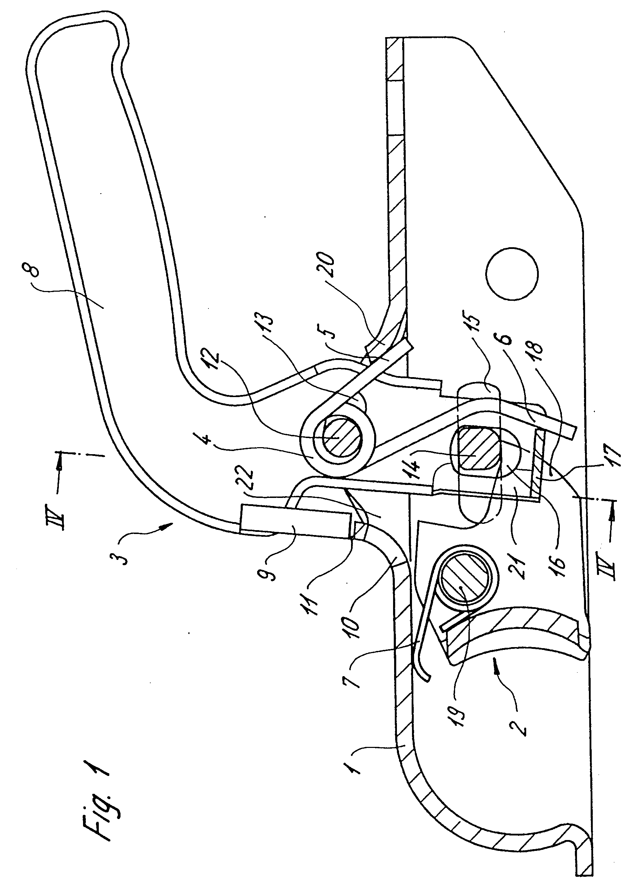

Der Sicherungszapfen 9 ist im vorderen, der Kugelpfanne 2 zugewandten Stirnbereich des Handgriffs 3 befestigt. In normaler Schließstellung, also mit intakter Schenkelfeder, wie sie in der Fig. 1 gezeigt ist, endet der Sicherungszapfen 9 mit geringem Abstand oberhalb der Abstützfläche 11.

Hierdurch wird ein einwandfreies Hochziehen und Verschwenken des Handgriffs 3 gewährleistet.

Als Drehachse beim Verschwenken dient der Querbolzen 12, der, wie bereits erwähnt, im Kupplungsgehäuse 1, und zwar in angeformten seitlichen Flanken 22, gelagert ist.

Dabei durchtritt der Querbolzen 12 die Griffteile 8 des Handgriffs 3 im Bereich jeweils eines Langloches 13, das sich etwa in Schwenkrichtung des Handgriffs 3 erstreckt.

Die Länge des Langloches 13 ist dabei so bemessen, daß der Sicherungszapfen 9 ohne Behinderung aus dem Bereich der Abstützfläche 11 bewegt wird.

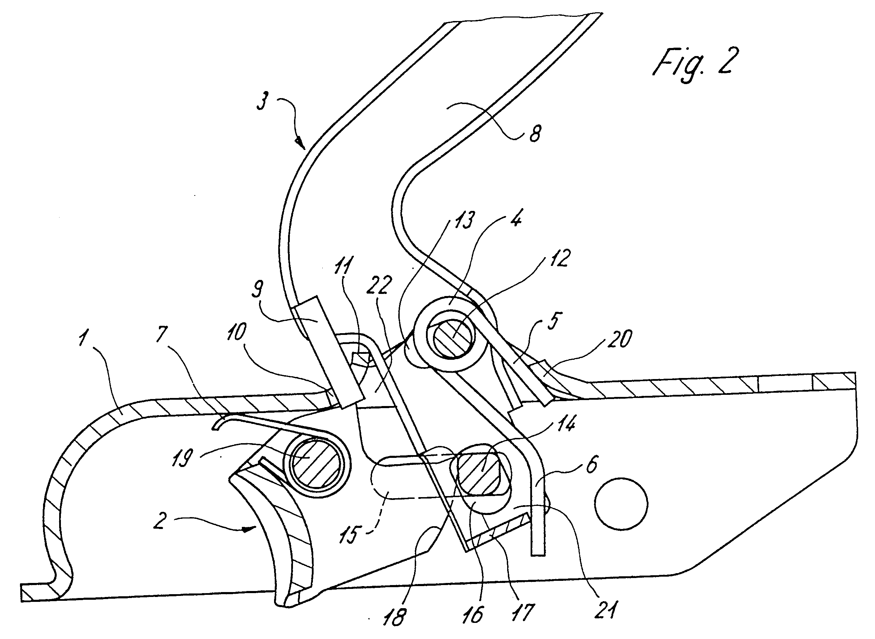

Um ein einwandfreies Öffnen der Kugelkopfkupplung bzw. der Kugelpfanne 2 zu ermöglichen (Fig. 2), weist das Kupplungsgehäuse 1 der Abstützfläche 11 genachbart eine Gehäuseöffnung 10 auf, in die der Sicherungszapfen 9 bei hochgeschwenkter Stellung des Handgriffs 3 eintauchen kann.

Dies geschieht berührungsfrei, so daß der Sicherungszapfen 9 praktisch keinerlei Verschleiß unterliegt.

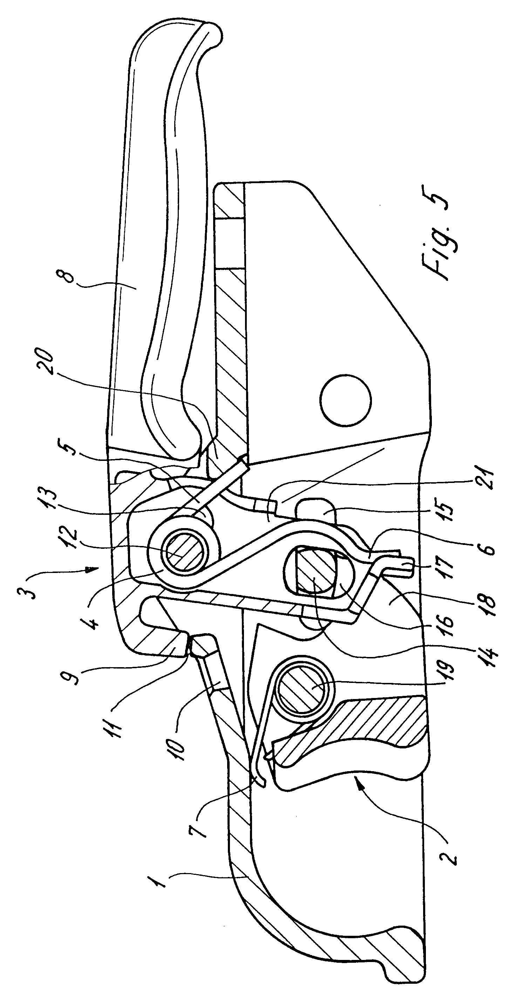

Die in den Fig. 1 und 5 gezeigte Arretierstellung ist dann gegeben, wenn eine nicht dargestellte Kugel im Kupplungsmaul einliegt, d.h. von der Kugelpfanne 2 teilweise umschlossen wird.

Dabei wird ein Öffnen der Kugelpfanne dadurch blockiert, daß der Arretierungsbolzen 14 auf den Auflaufnasen 18 aufliegt. Der Arretierungsbolzen 14 wird in dieser Arretierstellung dadurch gehalten, daß die Seitenteile 21 des Handgriffs 3 unter Druck der Schenkelfeder 4 stehen, wobei der Schenkel 6 gegen den Anschlag 17 drückt.

Zum Lösen aus dieser Arretierstellung wird der Handgriff durch Hochziehen des Griffteiles 8 verschwenkt, wobei diese Verschwenkung gegen die Federkraft der Schenkelfeder 4 erfolgt. Gleichzeitig wird - wie die Fig. 2 sehr deutlich zeigt - der Arretierungsbolzen 14 entlang des Langloches 15 aus seiner Arretierungsposition gezogen, wobei die Kugelpfanne 2 durch die Feder 5 aus einer Schließstellung gedrückt wird.

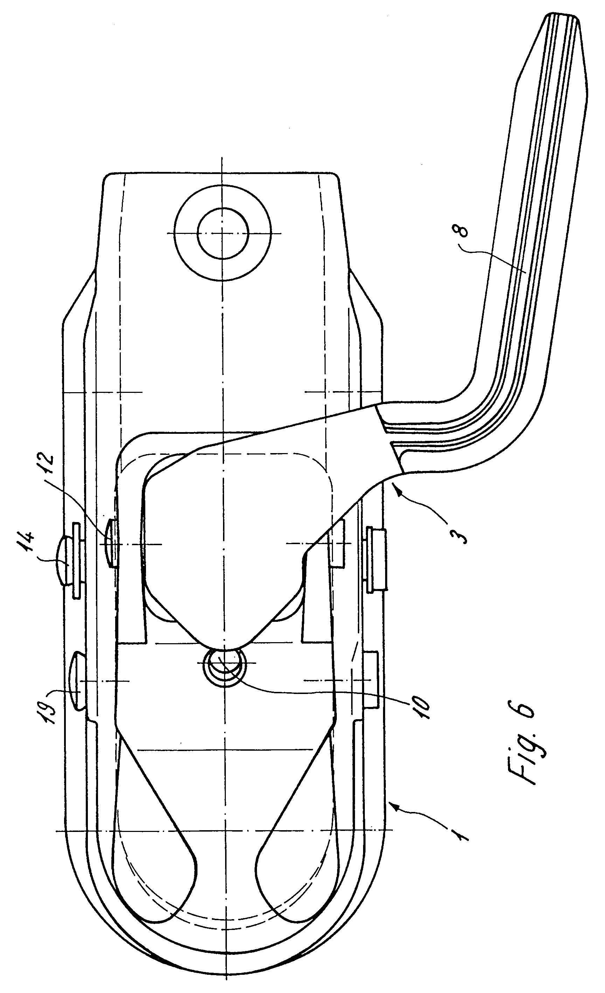

Bei dem in den Figuren 5 und 6 gezeigten Ausführungsbeispiel ist das Griffteil 8 des Handgriffs 3 so angeordnet, daß es seitlich, außerhalb des Überdeckungsbereiches des Kupplungsgehäuses 1 verläuft, und zwar ebenso wie das Griffteil 8 des in der Figur 1 dargestellten Handgriffs 3 nach hinten gerichtet.

In der Draufsicht (Figur 6) ist erkennbar, daß der Handgriff 3 eine im weitesten Sinn L-förmige Grundfläche beschreibt.

Hierdurch ist eine extrem flache Bauweise des Handgriffs 3 möglich.

Da das Griffteil 8 auch außerhalb einer nicht dargestellten, mit dem Kupplungsgehäuse 1 verbindbaren Zugstange liegt, ist ein ungehinderter Zugriff auf das Griffteil 8 auch in einer tiefsten Stellung möglich.

Diese Ausführungsvariante bietet sich dann an, wenn oberhalb der Kugelkopfkupplung durch Fahrzeugbauteile, beispielsweise niedriger angeordnete Hecktüren, sehr wenig Platz vorhanden ist.

Für besonders enge Platzverhältnisse kann es sinnvoll sein, daß das Griffteil 8 in vertikaler Ebene nach unten hin, also zum Kupplungsgehäuse hin, abzuwinkeln, so daß das Griffteil 8 selbst in hochgeschwenkter Stellung nicht oder nur unwesentlich über die höchste Ebene des Handgriffs 3 im übrigen hinausragt.

Zum Schutz des Schenkels 6 der Schenkelfeder 4 von der Gehäuseunterseite her ist dieser Schenkel 6 abgewinkelt, so daß er nicht über den Anschlag 17 nach unten hin vorsteht.

### Bezugszeichenliste

- 1: Kupplungsgehäuse
- 2: Kugelpfanne
- 3: Handgriff
- 4: Schenkelfeder
- 5: Schenkel
- 6: Schenkel
- 7: Feder
- 8: Griffteil
- 9: Sicherungszapfen
- 10: Gehäuseöffnung
- 11: Abstützfläche
- 12: Querbolzen
- 13: Langloch
- 14: Arretierungsbolzen
- 15: Langloch
- 16: Langloch
- 17: Anschlag
- 18: Auflaufnase
- 19: Lagerbolzen
- 20: Anlage
- 21: Seitenteil
- 22: Flanke

## Patentansprüche

1. Kugelkopfkupplung für einen Anhänger, mit einem Kupplungsgehäuse (1), einer schwenkbar darin gelagerten, in Schließstellung arretierbaren, federbelasteten Kugelpfanne (2) und einem die Arretierung der Kugelpfanne (2) über einen in dem Kupplungsgehäuse (1) längsverschiebbar gelagerten Arretierungsbolzen (14) beeinflussenden, in das Kupplungsgehäue (1) hineinragenden Handgriff (3), dessen Griffteil (8) unter der Wirkung einer Schenkelfeder (4) in Richtung des Kupplungsgehäuses (1) gedrückt wird, wobei die Schenkelfeder (4)auf einem Querbolzen (12) geführt ist, der Langlöcher (13) des Handgriffs (3) durchtritt und endseitig im Kupplungsgehäuse (1) gelagert ist, **dadurch gekennzeichnet, daß** an dem der Kugelpfanne (2) zugewandten Stirnbereich des Handgriffs (3) ein Sicherungszapfen (9) befestigt ist, der in Schließstellung der Kugelpfanne (2) mit geringem Abstand oberhalb der Gehäuseoberseite endet und in Offenstellung der Kugelpfanne (2) in eine Gehäuseöffnung (10) ragt, und daß die Langlöcher (13) des Handgriffs (3), die den Querbolzen (12) aufnehmen, etwa in Schwenkrichtung des Handgriffs (3) verlaufen.

2. Kugelkopfkupplung nach Anspruch 1, dadurch gekennzeichnet, daß die Länge des Langloches (13) zumindest dem Abstand zwischen einer Abstützfläche (11) und der Gehäuseöffnung (10) entspricht.

3. Kugelkopfkupplung nach Anspruch 1, dadurch gekennzeichnet, daß sich ein Schenkel (5) der Schenkelfeder (4) an der Unterseite der Gehäuseoberseite abstützt.

4. Kugelkopfkupplung nach Anspruch 3, dadurch gekennzeichnet, daß die Gehäuseoberseite im Bereich der Abstützung des Schenkels (5) als Anlage (20) ausgebildet ist.

5. Kugelkopfkupplung nach Anspruch 1 oder 3, dadurch gekennzeichnet, daß der andere Schenkel (6) der Schenkelfeder (4) an einem Anschlag (17) des Handgriffs (3) anliegt.

6. Kugelkopfkupplung nach Anspruch 5, dadurch gekennzeichnet, daß der Anschlag (17) unterhalb des Arretierungsbolzens (14) angeordnet ist.

7. Kugelkopfkupplung nach Anspruch 5, dadurch gekennzeichnet, daß der Anschlag (17) an Seitenteilen (21) des Handgriffs (3) angeformt ist.

8. Kugelkopfkupplung nach Anspruch 1, dadurch gekennzeichnet, daß der Querbolzen (12) in Flanken (22) gelagert ist, die an den Seitenteilen des Kupplungsgehäuses (1) angeformt sind.

9. Kugelkopfkupplung nach Anspruch 1, dadurch gekennzeichnet, daß das Griffteil (8) seitlich, außerhalb der Überdeckungsebene des Kupplungsgehäuses (1) verläuft.

10. Kugelkopfkupplung nach Anspruch 5, dadurch gekennzeichnet, daß der Schenkel (6) abgewinkelt ist und oberhalb des Anschlages (17) endet.

## Claims

1. A ball head coupling for a trailer, comprising a coupling housing (1), a spring-loaded ball cup (2) which is mounted pivotably therein and which can be arrested in a closed position, and a handle (3) which projects into the coupling housing (1) and which influences arresting of the ball cup (2) by way of an arresting pin (14) which is longitudinally displaceably mounted in the coupling housing (1), the handle (3) having a grip portion (8) which is urged in the direction of the coupling housing (1) under the action of a leg spring (4), wherein the leg spring (4) is guided on a transverse pin (12) which passes through slots (13) in the handle (3) and is mounted at the ends in the coupling housing (1), characterised in that fixed to the end region of the handle (3), which is towards the ball cup (2), is a safety projection (9) which in the closed position of the ball cup (2) terminates at a small spacing above the top side of the housing and in the open position of the ball cup (2) projects into an opening (10) in the housing, and that the slots (13) in the handle (3), which accommodate the transverse pin (12), extend approximately in the pivotal direction of the handle (3).

2. A ball head coupling according to claim 1 characterised in that the length of the slot (13) corresponds at least to the spacing between a support surface (11) and the opening (10) in the housing.

3. A ball head coupling according to claim 1 characterised in that a leg (5) of the leg spring (4) bears against the underside of the top side of the housing.

4. A ball head coupling according to claim 3 characterised in that in the region where the leg (5) bears thereagainst the top side of the housing is in the form of a contact means (20).

5. A ball head coupling according to claim 1 or claim 3 characterised in that the other leg (6) of the leg spring (4) bears against an abutment (17) on the handle (3).

6. A ball head coupling according to claim 5 characterised in that the abutment (17) is arranged beneath the arresting pin (14).

7. A ball head coupling according to claim 5 characterised in that the abutment (17) is formed on side portions (21) of the handle (3).

8. A ball head coupling according to claim 1 characterised in that the transverse pin (12) is mounted in flanks (22) which are formed on the side portions of the coupling housing (1).

9. A ball head coupling according to claim 1 characterised in that the handle portion (8) extends laterally outside the top plane of the coupling housing (1).

10. A ball head coupling according to claim 5 characterised in that the leg (6) is angled and terminates above the abutment (17).

## Revendications

1. Attelage à tête sphérique pour une remorque, comportant un boîtier d'accouplement (1), un coussinet sphérique (2) monté pivotant à l'intérieur de celui-ci, pouvant être bloqué en position de fermeture, soumis à l'action d'un ressort ainsi qu'une poignée (3) pénétrant à l'intérieur du boîtier d'accouplement (2), influençant le blocage du coussinet sphérique (2) par l'intermédiaire d'une tige de blocage (14) montée de manière à pouvoir coulisser longitudinalement dans le boîtier d'accouplement (1), dont la partie de préhension (8) est pressée en direction du boîtier d'accouplement (1), sous l'action d'un ressort à branches (4), le ressort à branches (4) étant monté sur un axe transversal (12), qui traverse des trous oblongs (13) de la poignée (3) et qui est monté du côté de ses extrémités dans le boîtier d'accouplement (1), caractérisé en ce que sur la zone frontale de la poignée (3), tournée vers le coussinet sphérique (2), est fixé un tenon de sûreté (9), qui en position de fermeture du coussinet sphérique (2) se termine à faible distance au-dessus de la face supérieure du boîtier et qui, en position d'ouverture du coussinet sphérique (2), pénètre dans une ouverture (10) du boîtier et en ce que les trous oblongs (13) de la poignée (3), qui reçoivent l'axe transversal (12), s'étendent sensiblement dans le direction de pivotement de la poignée (3).

2. Attelage à tête sphérique selon la revendication 1, caractérisé en ce que la longueur du trou oblong (13) correspond au moins à la distance entre une surface d'appui (11) et l'ouverture (10) du boîtier.

3. Attelage à tête sphérique selon la revendication 1, caractérisé en ce qu'une branche (5) du ressort à branches (4) prend appui sur le côté inférieur de la face supérieure du boîtier.

4. Attelage à tête sphérique selon la revendication 3, caractérisé en ce que la face supérieure du boîtier sert de surface de butée (20) dans la zone de l'appui de la branche (5).

5. Attelage à tête sphérique selon la revendication 1 ou 3, caractérisé en ce que l'autre branche (6) du ressort à branches (4) s'applique contre une butée (17) de la poignée (3).

6. Attelage à tête sphérique selon la revendication 5, caractérisé en ce que la butée (17) est disposée au-dessous de la tige de blocage (14).

7. Attelage à tête sphérique selon la revendication 5, caractérisé en ce que la butée (17) est formée sur des parties latérales (21) de la poignée (3).

8. Attelage à tête sphérique selon la revendication 1, caractérisé en ce que l'axe transversal (12) est monté dans des flancs (22), qui sont formés sur les parties latérales du boîtier d'accouplement (1).

9. Attelage à tête sphérique selon la revendication 1, caractérisé en ce que la partie de préhension (8) s'étend latéralement, à l'extérieur du plan de recouvrement du boîtier d'accouplement (1).

10. Attelage à tête sphérique selon la revendication 5, caractérisé en ce que la branche (6) est coudée et se termine au-dessus de la butée (17).
